Europäisches Patentamt

(19) European Patent Office

Office européen des brevets

(11) Veröffentlichungsnummer: **0 149 142**

**B1**

(12) **EUROPÄISCHE PATENTSCHRIFT**

(45) Veröffentlichungstag der Patentschrift:
15.02.89

(21) Anmeldenummer: **84115275.4**

(22) Anmeldetag: **12.12.84**

(51) Int. Cl.⁴: **C 08 F 8/22**

| E R R A T U M |
|---|

(SEITE, SPALTE, ZEILE)
(PAGE, COLUMN, LINE)
(PAGE, COLONNE, LIGNE)

| DIE TEXTSTELLE :<br>TEXT PUBLISHED :<br>LE PASSAGE SUIVANT : | | | LAUTET BERICHTIGT:<br>SHOULD READ :<br>DEVRAIT ETRE LU : |
|---|---|---|---|
| m³ Toluol zugesetzt und das | 7 | 59 | ml Toluol zugesetzt und das |

Tag der Entscheidung )
über die Berichtigung )
Date of decision on ) 24.05.89
rectification: )
Date de décision portant )
sur modification: )

Ausgabe- und Ver- )
öffentlichungstag: )
Issue and publication ) 06.09.89
date: )
Date d'edition et de )
publication: )

Patbl.Nr)

EPB no:) 89/36.

Bull. no:)

Europäisches Patentamt

European Patent Office

Office européen des brevets

(19)

(11) Veröffentlichungsnummer: **0 149 142**
**B1**

(12) # EUROPÄISCHE PATENTSCHRIFT

(45) Veröffentlichungstag der Patentschrift:
15.02.89

(51) Int. Cl.⁴: **C 08 F 8/22**

(21) Anmeldenummer: **84115275.4**

(22) Anmeldetag: **12.12.84**

(54) **Verfahren zur Chlorierung von Polymeren.**

(30) Priorität: **21.12.83 DE 3346137**

(43) Veröffentlichungstag der Anmeldung:
**24.07.85 Patentblatt 85/30**

(45) Bekanntmachung des Hinweises auf die Patenterteilung:
**15.02.89 Patentblatt 89/7**

(84) Benannte Vertragsstaaten:
**BE DE FR GB IT NL SE**

(56) Entgegenhaltungen:
**FR-A-2 413 408**
**GB-A-815 068**
**US-A-2 748 105**
**US-A-3 334 078**

(73) Patentinhaber: **BASF Aktiengesellschaft, Carl-Bosch- Strasse 38, D-6700 Ludwigshafen (DE)**

(72) Erfinder: **Bronstert, Klaus, Dr. Chem., Gartenstrasse 26, D-6719 Carlsberg (DE)**

## Beschreibung

Die Erfindung betrifft ein Verfahren zur Chlorierung von Polymeren zu chlorierten Polymeren durch Umsetzen von festen organischen Polymeren mit Chlor in Gegenwart von niedrigsiedenden, Halogen enthaltenden organischen Lösungsmitteln, in denen das Polymere gelöst oder suspendiert ist, bei Temperaturen, die den Siedepunkten der Gemische aus Chlor und Lösungsmittel entsprechen oder darunter durch Initiieren der Reaktion mit aktinischem Licht oder anderen, Radikale erzeugenden Initiatoren.

Bei derartigen Verfahren werden chlorierte Polymere, insbesondere chloriertes Polyvinylchlorid und chloriertes Polyethylen erhalten, die wegen ihrer speziellen Eigenschaften, wie hohe Wärmeformbeständigkeit und gute chemische Beständigkeit, gesuchte Werkstoffe sind.

Es ist bereits bekannt, Polymere wie Polyvinylchlorid, Polyethylen oder Polystyrol in Suspension in Wasser bzw. konzentrierter Salzsäure und Initiierung der Reaktion durch UV-Licht, wobei auch noch quellend wirkende Chlorkohlenstoffe oder Chlorkohlenwasserstoffe zugesetzt werden, zu chlorieren (vgl. US-Patente 2 996 489, 2 426 808, 2 590 651, 3 100 762, 3 334 077 und 3 334 078 etc.). Nachteil diser Prozesse ist neben der Korrosivität der Salzsäure die Tatsache, daß das zur Chlorierung benötigte Chlor zur Reaktion mit dem Polymeren durch das Suspensionsmittel, in dem es wenig löslich ist, hindurchdiffundieren muß, was auch bei erhöhter Temperatur nur langsam abläuft. Werden Quellungsmittel benutzt, z. B. Chlorkohlenwasserstoffe, so ist es schwierig, diese nach der Reaktion vollständig aus den Endprodukten zu entfernen.

Es ist auch bereits bekannt, Polymere wie Polyethylen oder Polypropylen, in Gegenwart von niedrigsiedenden chloriertem Lösungsmitteln wie Kohlenstofftetrachlorid, Chloroform, 1,1,1-Trichlorethan oder Methylenchlorid bei Temperaturen über dem Siedepunkt des jeweiligen Lösungsmittels unter der Einwirkung von UV-Licht mit Chlorgas zu chlorieren (vgl. z. B. GB-A-815 088). Nachteilig bei diesen bekannten Verfahren ist die aufwendige Abtrennung des Lösungsmittels. Ein weiterer Nachteil des bekannten Verfahrens ist die Tatsache, daß die bekannten Lösungsmittel das Polymere schlecht anquellen, insbesondere wenn es sich um Polyvinylchlorid handelt. Dies hat zur Folge, daß ein Chlorierungsprodukt entsteht, in dem das Chlor inhomogen verteilt ist. Bei höheren Temperaturen ist zwar ein besseres Anquellen möglich, jedoch weisen die Chlorierungsprodukte eine verminderte thermische Stabilität auf.

Aufgabe der Erfindung war es, ein Verfahren zur Chlorierung von Polymeren in Suspension oder Lösung aufzufinden, bei dem die oben beschriebenen Nachteile nicht auftreten. Weitere Aufgaben bestanden darin, bei der Chlorierung eine gute statistische Verteilung des Chlors im chlorierten Polymeren zu erreichen, Produkte mit einer guten thermischen Stabilität zu schaffen und die Reaktionsgeschwindigkeit bei der Umsetzung des Chlors mit dem Polymeren zu erhöhen.

Diese Aufgaben wurden dadurch gelöst, daß das Lösungsmittel aus 20 bis 100 Gew.-% Phosgen besteht. Bevorzugt besteht das Lösungsmittel aus Phosgen oder einem Gemisch aus mindestens 50 Gew.-% Phosgen und einem Chlorfluorkohlenstoff oder einem Chlorfluorkohlenwasserstoff. Inbesondere bevorzugt ist ein Lösungsmittelgemisch bestehend aus mindestens 50 Gew.-% Phosgen und Chlortrifluormethan. Die Aufgaben werden ferner durch chlorierte Polymere gelöst, die nach erfindungsgemäßem Verfahren erhalten werden.

Bei dem Verfahren zur Chlorierung von Polymeren mit Chlor kommen alle hochmolekularen, festen organischen Polymeren in Betracht, die mit Chlor zu chlorierten Polymeren umsetzbar sind. Es sind dies vor allem Polyvinylchlorid, Polyvinylidenchlorid und Mischpolymerisaten des Vinylchlorids mit monoolefinisch ungesättigten Verbindungen und Molekulargewichten von 100.000 bis 1.000.000, Polystyrole, Olefinpolymerisate wie Polyethylen, Polypropylen, Ethylen-Propylen-Copolymerisate oder Polybutene. Die Chlorierung derartiger fester Polymerisate ist an sich bekannt, so daß sich eine weitere Aufzählung von Einzelheiten erübrigt. Bei der Chlorierungsreaktion entstehen chlorierte Polymere, die einen hohen Chlorgehalt aufweisen, gewöhnlich von 25 bis 75 Gew.-%. So entstehen beispielsweise aus Polyethylen chloriertes Polyethylen mit Chlorgehalten von 18 bis 48 Gew.-% und aus Polyvinylchlorid, das einen Chlorgehalt von 55 bis 57 Gew.-% aufweist, chlorierte Polymere mit Chlorgehalten bis zu 75 Gew.-%.

Die Chlorierung der oben genannten Polymeren wird gewöhnlich in niedrigsiedenden halogenierten organischen Lösungsmitteln vorgenommen. Hierunter werden flüssige organische Medien verstanden, welche organische oder anorganische Stoffe lösen, ohne diese chemisch zu verändern, und aus den Lösungen unter Zurücklassung der chemisch unveränderten Stoffe verdunsten. Im vorliegenden Falle können die Lösungsmittel das Polymere entweder lösen oder anquellen und/oder suspendieren. Als geeignete Lösungsmittel sind vor allem Tetrachlormethan, Chloroform, 1,1,1,-Trichlorethan, Methylenchlorid, Tetrachlorethan, Dichlorbenzol, Chlortrifluormethan, Fluortrichlormethan zu nennen, Das Chlorieren von Polymeren in diesen Lösungsmitteln ist Stand der Technik und beispielsweise in den Literaturstellen GB-A-815 088, GB-A-1 004 193, CA-A-854 775 und US-A-3 597 408 beschrieben. Nach bekannten Verfahren wird die Umsetzung mit Chlor bei Siedetemperatur des Lösungsmittels oder bei Temperaturen darunter durch Initiieren der Chlorierungsreaktion mit aktinischem Licht vorgenommen. Für die Initiierung ist jede Art von aktinischem Licht geeignet, wie es erzeugt wird von gewöhnlichen Glühbirnen, Halogenlampen, Neonlampen, UV-Quecksilberdampflampen, elektrischen Lichtbögen usw. UV-Licht ist jedoch besonders geeignet. Es können aber auch andere, Radikale erzeugende Initiatoren eingesetzt werden, wie kleine Mengen in freie Radikale zerfallende organische oder anorganische Peroxide (vgl. US-A-4 386 189).

Die Chlorierungsreaktion kann bei Atmosphärendruck oder bei erhöhten Drücken vorgenommen werden. Es ist häufig üblich, die Umsetzung des Chlors mit dem Polymeren unter Luftausschluß durchzuführen.

Nach erfindungsgemäßem Verfahren wird die oben beschriebene Chlorierung der Polymeren mit Chlor in einem Halogen enthaltenden organischen Lösungsmittel, das zu 20 bis 100, insbesondere 50 bis 100 Gew.-% aus Phosgen besteht, vorgenommen. Das Lösungsmittel kann demnach zu 100 Gew.-% aus Phosgen oder aus einem Gemisch aus 20 bis 100 Gew.-% Phosgen und 0 bis 80 Gew.-% eines anderen, Halogen enthaltenden organischen Lösungsmittels, das in Phosgen löslich ist, bestehen. Am besten geeignet ist aber reines Phosgen. Bevorzugt kann das Phosgengemisch weniger als 50 Gew.-% eines Chlorfluorkohlenstoffs oder Chlorfluorkohlenwasserstoffs, inbesondere Chlortrifluormethan, enthalten. Besonders bevorzugt sind die Gemische aus 70 bis 85 Gew.-% Phosgen und 15 bis 30 Gew.-% eines Chlorfluorkohlen(wasser)stoffs. Das als Lösungsmittel verwendete Phosgen siedet bei 7,6°C und ist, komprimiert in Stahlflaschen, im Handel erhältlich. Es soll zweckmäßig einen Reinheitsgrad von mehr als 95 Gew.-% aufweisen und farblos sein. Insbesondere sollten keine Schwermetallhalogenide oder Halogenide des Bors, Aluminiums, Zinns, Antimons, Schwefels oder Phosphors zugegen sein.

Bei der Chlorierung wird unter Normaldruck oder bei Überdruck bei Temperaturen, die dem Siedepunkt des Gemisches aus Phosgen und Chlor entsprechen oder darunter, d. h. im allgemeinen bei Temperaturen zwischen +50°C und -50°C in schneller Reaktion zu dem entsprechenden chlorierten Polymeren umgesetzt. Das für die Umsetzung erforderliche Chlor kann vollständig oder teilweise bei Beginn der Reaktion vorliegen. Es kann in flüssiger oder gasförmiger Form dem Lösungsmittel zugesetzt werden. Gegebenenfalls wird der Rest des benötigten Chlors während der Reaktion in Portionen oder kontinuierlich zugegeben. Das Chlor wird vorzugsweise vollständig umgesetzt, mit Ausnahme der Menge, die mit dem sich entwickelnden Chlorwasserstoff aus dem System entweicht. Am Ende der Reaktion liegt vorzugsweise eine chlorfreie Suspension oder Lösung von chloriertem Polymeren in Phosgen vor. Es ist nicht notwendig, überschüssige Mengen an Chlor abzutrennen und bei neuen Ansätzen zu verwenden.

Setzt man Polyethylen für die Chlorierung ein, so verwendet man zweckmäßig Produkte mit großer Oberfläche, die durch geeignete Polymerisation in Suspension oder Gasphase (z. B. Ziegler-Polymerisation) oder durch Mahlen oder Umfällen (z. B. von Hochdruckpolyethylen) erzeugt werden können.

Das anzuwendende Gewichtsverhältnis von Polymer zu dem Lösungsmittel Phosgen hängt u.a. vom Ausgangspolymeren ab. Polymere mit niedrigem Schüttgewicht erfordern mehr, solche mit hohem Schüttgewicht weniger Phosgen. Im allgemeinen sind z. B. Suspensionen, die 20 Gew.-% Polyvinylchlorid mit einem Schüttgewicht über 0,5 g/cm³ enthalten, bis zum Schluß der Reaktion gut rührbar. Das Verhältnis kann man zu höheren PVC-Gehalten verschieben, wenn man die Quellung durch Zugabe kleiner Mengen Fluorchlorkohlenwasserstoffe bzw. Fluorchlorkohlenstoffe reduziert. Verwendet man z. B. eine Mischung aus Phosgen und 23 Gew.-% Chlortrifluormethan, so läßt sich der PVC-Gehalt der Suspension auf ca. 35 bis 38 Gew.-% erhöhen, wobei sich die Reaktionszeit etwa verdoppelt, die Qualität des Endproduktes jedoch etwas vermindert ist. Im Falle von Lösungen kann man im allgemeinen Konzentrationen von 10 Gew.-% nicht überschreiten.

Im Falle der Verwendung von PVC ist es besonders vorteilhaft, wenn es die folgenden Eigenschaften hat: - hohes Molekulargewicht, um das chlorierte PVC for Extrusion und Spritzguß geeignet zu machen; - eine grobkörnige Pulverform, um die Suspension bei relativ hoher Konzentration gut rührbar zu machen; - gute Reinheit und nicht gealtertes Material.

Der Prozeß ist im speziellen geeignet for die Chlorierung von Polyvinylchloriden mit einem Chlorgehalt zwischen 55 und etwa 57 Gew.-%, die durch Suspensionspolymerisation, Massepolymerisation, einer Kombination von Masse + Suspensionspolymerisation, Mikrosuspensions- oder Emulsionspolymerisation hergestellt werden, und ein Molekulargewicht zwischen 100.000 und 1.000.000 aufweisen, bzw. den entsprechenden Grenzviskositäten oder K-Werten. Besonders geeignet sind Suspensions-PVC-Typen sowie Masse-PVC-Typen mit einem K-Wert von mindestens 40.

Im Gegensatz zu vielen anderen Prozessen wird für die Chlorierung von PVC nicht unbedingt ein spezielles, besonders poröses Ausgangsmaterial benötigt. Die Quellwirkung des Phosgens ist so groß, daß handelsübliche PVC-Typen eingesetzt werden können. Sofern Wert gelegt wird auf ein besonders helles chloriertes PVC, sollten hilfsmittelfreie PVC-Typen eingesetzt werden, wie die sog. Masse-PVC-Typen. Die Hilfsmittel, meist Methylzellulose oder modifizierte Polyvinylalkohole, ergeben bei der Verarbeitung braun verfärbte Formkörper. Die Farbe hat jedoch keinen Einfluß auf die thermische Stabilität.

Der Chlorierungsprozeß kann durchgeführt werden beim Siedepunkt des Gemisches von Chlor und Phosgen, wobei die Reaktionswärme durch Siedekühlung abgeführt wird, oder unterhalb dieser Temperatur, wenn man es vorzieht, die Reaktionswerme durch die Wand des Reaktors oder über Kühlschlangen mit Solelösung abzuführen. Die bevorzugte Reaktionstemperatur liegt zwischen -50°C bis +50°C. Bei Atmosphärendruck und Siedekühlung arbeitet man zwischen -8 bis +9°C, je nachdem, welcher Anteil des für die Reaktion erforderlichen Chlors bei Beginn der Initiierung vorgelegt wird. Mit dem Ablauf der Reaktion steigt die Temperatur allmählich an bis zum Siedepunkt des reinen Phosgens.

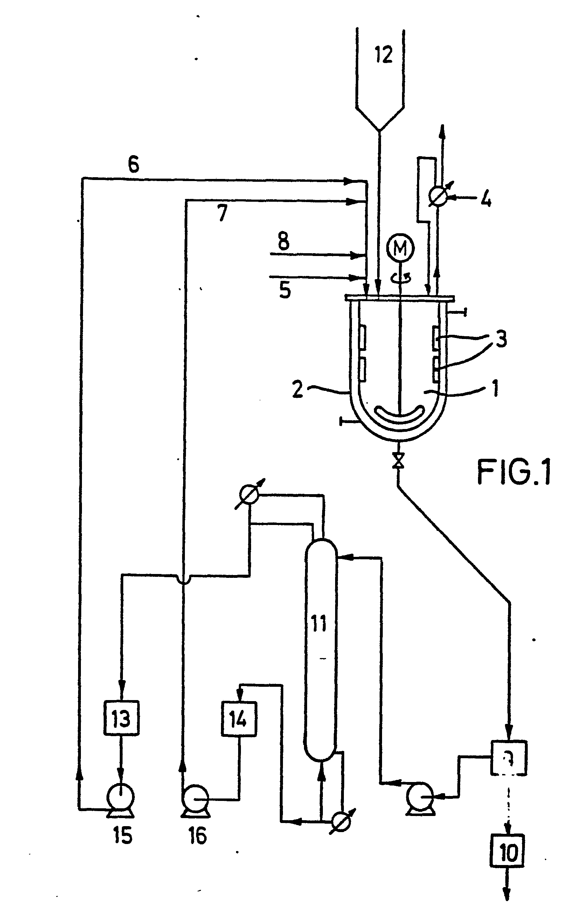

Bevorzugt wird die Chloierung chargenweise ausgeführt. In Fig. 1 ist schematish ein Rührreaktor 1 dargestellt, der aus einem korrosionsbeständigen Material wie Nickel, Hastelloy oder emailliertem Stahl besteht und bei Normaldruck oder Überdruck betrieben werden kann. Der Reaktor ist mit genügend UV-Brennern 3 ausgerüstet, um die Reaktion mit ausreichender Geschwindigkeit ablaufan zu lassen. Ferner ist er mit einem Külmantel 2 und einem Rückflußkühler 4 ausgestattet, die dazu dienen, die Reaktionswärme abzuführen und aus dem Abgas das mitgeführte Chlor und Phosgen zu kondensieren und in den Reaktor zurückzuführen.

Nachdem der Reaktor aus dem Behälter 12 mit dem Polymer beschickt ist, wird die Luft durch Spülen mit Stickstoff 5 verdrängt. Sodann wird der Reaktor unter langsamem Rühren mit der vorgesehenen Menge Phosgen 6 beschickt, wobei verdampfendes Phosgen im Rückflußkühler 4 kondensiert und zurückgeführt wird, und gegebenenfalls der Fluorchlorkohlenstoff 7 zugesetzt. Sodann wird die berechnete Menge Chlor 8 zugesetzt sowie ein kleiner Überschuß von 1 bis 5 Gew.-%, der das mit dem Abgas verloren gehende Chlor ersetzt.

Bei langsamem Rühren werden dann die UV-Brenner 3 in Betrieb genommen und die Reaktion in Gang gesetzt. Über die Intensität der Bastrahlung wird die Reaktionsgeschwindigkeit gesteuert. Die bevorzugte Reaktionstemperatur liegt zwischen -30°C bis +25°C, meist wird jedoch zwischen -10°C und +15°C gearbeitet. Die Reaktionswärme wird entweder über die Reaktorwand 2 durch Außenkühlung oder durch Siedekohlung über den Kühler 4 abgeführt.

Die Reaktion ist beendet, wenn die Farbe des durch den Chlorgehalt gelb gefärbten kondensierenden Phosgens vollständig verschwunden und das Suspensionsmittel oder die Lösung wasserklar ist.

Nach Beendigung der Reaktion kann das chlorierte Polymer aus der Suspension oder Lösung auf irgend eine bekannte Weise isoliert werden. Eine bevorzugte Aufarbeitung ist die Zugabe einer mit dem Phosgen mischbaren inerten Flüssigkeit, welche die im Falle einer Suspension auftretende Quellung des chlorierten Polymeren durch das Phosgen rückgängig macht. Hierzu ist im allgemeinen die gleiche Gewichtsmenge wie das enthaltene Phosgen ausreichend. Besonders geeignet sind aliphatische Kohlenwasserstoffe wie Pentan, Hexan, Heptan, Octan, Isooctan oder aliphatische Schnitte von Erdöldestillaten. Anschließend wird filtriert (9), der Filterkuchen nach bekannten Methoden vom Lösungsmittel 10 befreit und das Filtrat nach destillativer Trennung 11 über die Lagertanks 13 und 14 und die Pumpen 15 und 16 in den Prozeß zurückgeführt. Es ist auch möglich, nach Zugabe des Kohlenwasserstoffs das Phosgen aus dem Reaktor abzudestillieren, bis der Siedepunkt des reinen Kohlenwasserstoffs erreicht ist. Um das Phosgen vollständig aus den chlorierten Polymeren zu verdrängen, ist es zweckmäßig, bei dieser Operation Endtemperaturen über 100°C, vorzugsweise über 120°C, zu erreichen. Anschließend kann das chlorierte Polymer durch Abfiltrieren und Trocknen in Apparaten, die keine Korrosionsfestigkeit aufweisen müssen, zum trockenen Pulver aufgearbeitet werden. Liegt bei Ende der Reaktion eine Lösung in Phosgen vor, so setzt man z. B. einen Aromaten wie Toluol, Xylol oder ein anderes Lösungsmittel zu. Nach Abdestillieren des Phosgens kann man das chlorierte Polymer durch Fällen mit Alkohol oder Eintragen der Lösung in siedendes Wasser unter intensivem Rühren, wobei das Lösungsmittel abdestilliert wird, isolieren.

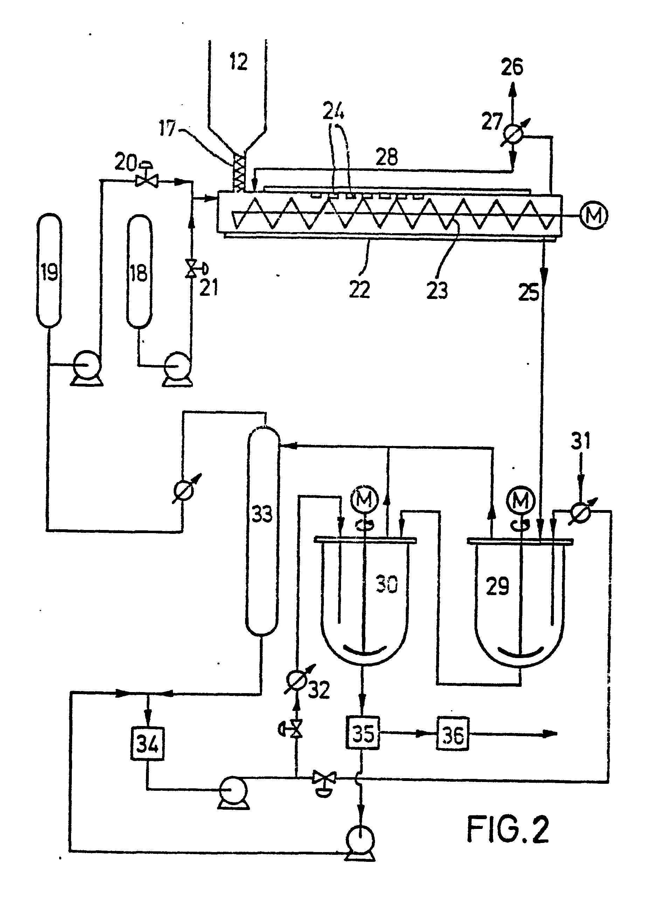

Die Reaktion kann auch kontinuierlich durchgeführt werden (Fig. 2). Das Polymer wird z. B. über eine Dosierschnecke 17, das Phosgen 18 und das Chlor 19 flüssig über die Mengenregler 20 und 21 im gewünschten Verhältnis kontinuierlich in einen horizontalen, ummantelten Reaktor 22 eingeführt, der mit einem achsialen Schneckenrührer 23 ausgestattet ist, der die Mischung, in der die Reaktion durch eingebaute UV-Brenner 24 in Gang gesetzt wird, mit einer solchen Geschwindigkeit zum Ausgang des Reaktors 25 fördert, daß dort die Reaktion beendet ist.

Der gebildete Chlorwasserstoff wird abgezogen (26) und in einem Kühler 27 von Phosgen und Chlor befreit, die in den Reaktor zurückgeführt werden (28). Die austretende Suspension wird in 2 hintereinander angeordneten Kesseln 29 und 30 mit Heptandampf, der in den Verdampfern 31 und 32 erzeugt wird, kontinuierlich von Phosgen befreit. Das Dampfgemisch wird in einer Kolonne 33 getrennt und die Komponenten über die Vorratstanks 19 und 34 in den Prozeß zurückgeführt. Die entstehende Heptansuspension wird in Rotationsfiltern 35 filtriert und der Filterkuchen im Trockner 36 von Kohlenwasserstoff befreit.

Es ist ein Vorteil des erfindungsgemäßen Verfahrens, daß das Phosgen schon bei tiefer Temperatur stärker quellend als bekannte Quellungsmittel wirkt, so daß Chlor leicht in das Polymere hineindiffundieren kann. Dadurch wird bei der Chlorierung eine relativ gute statistische Verteilung des Chlors im chlorierten Polymeren ereicht. Ferner ist die Reaktionsgeschwindigkeit höher als in bekannten Verfahren. Die Chlorierung läuft auch bei tiefen Temperaturen und mit kleinen Lichtintensitäten sehr schnell ab. Nach der Chlorierung kann das Phosgen wegen seines niedrigen Siedepunktes rückstandlos aus den chlorierten Polymeren entfernt werden. Im Falle von Polystyrol als Polymeres entsteht eine Lösung in Phosgen.

Die Verfahrensprodukte dieser Erfindung zeichnen sich insbesondere durch eine gute thermische Stabilität aus. Diese Verbesserung ist besonders hervorzuheben, weil sie eine bessere thermoplastische Verarbeitung ermöglicht. In Abhängigkeit vom Ausgangspolymeren wird ferner eine besonders geringe Eigenfarbe erhalten. Das chlorierte PVC gemäß diesem Verfahren ist besonders hell, wenn das Ausgangspolymere keine Hilfsstoffe wie Methylzellulose oder Polyvinylalkohol enthält. Die chlorierten PVC-Produkte gemäß Erfindung besitzen ferner bei gleichem Chlorgehalt eine höhere Wärmeformbeständigkeit als chlorierte PVC-Produkte, die nach anderen Verfahren hergestellt sind. Daher benötigt man zur Herstellung von "Legierungen" mit PVC mit gleicher Wärmeformbeständigkeit weniger chloriertes PVC-Verfahrensprodukt als bei Verwendung bekannter chlorierter PVC-Typen, was bessere Verarbeitbarkeit und niedrigere Kosten bedeutet.

Erfindungsgemäß chlorierte Polyethylene besitzen eine besonders gute thermische Stabilität, wenn sie aus Polyethylentypen mit niedrigem Gehalt an Schwermetallverunreinigungen hergestellt werden.

### Beispiele

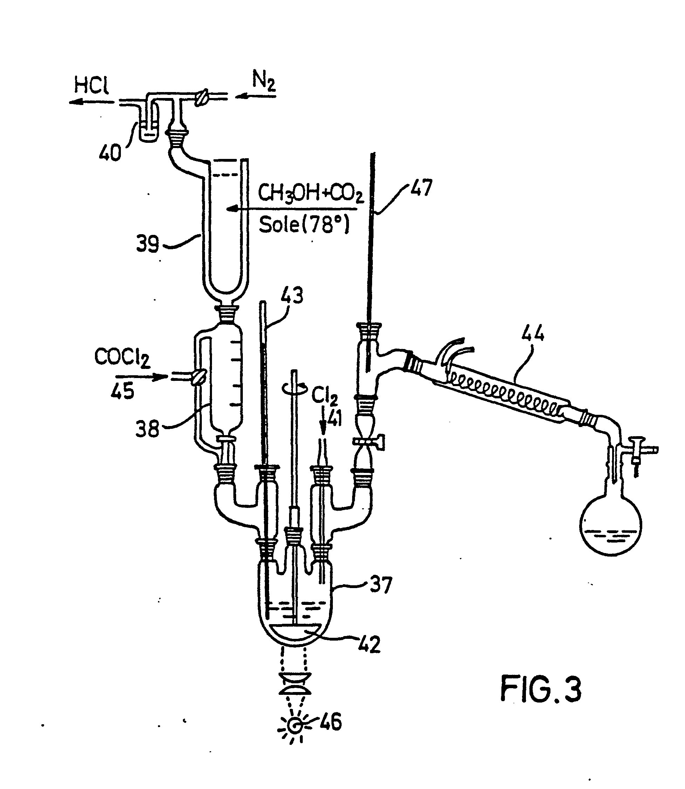

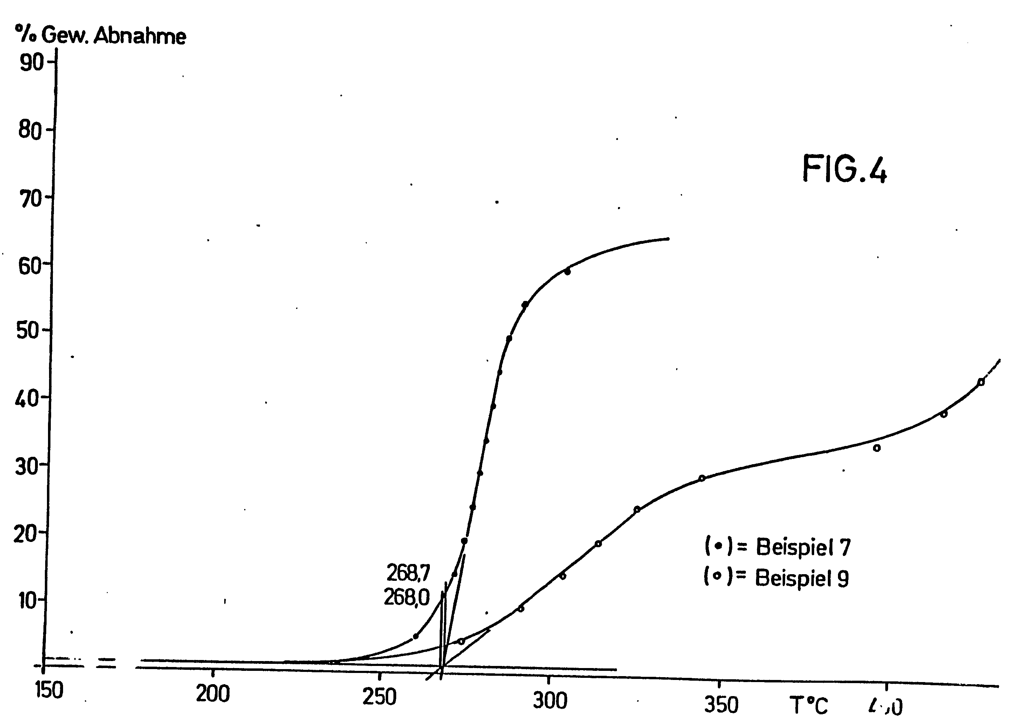

In Fig. 3 ist die in den Beispielen verwendete Apparatur dargestellt. In einem 2 Liter-Mehrhalskolben aus Quarzglas 37, der mit einem Tropftrichter 38, Kälterückflußkühler 39, Blasenzähler 40, Gaseinleitungsrohr 41, Rührer 42, Thermometer 43 und einer Destillierbrücke 44 versehen ist, werden 200 g Polymer eingefüllt. Über den Kälterückflußkühler 39 wird das in der Tabelle angegebene $COCl_2$ bzw. $COCl_2$ + Chlorfluormethan durch die Gaszuführung 45, in den Reaktionskolben 37 und in den Tropftrichter 38 kondensiert und unter Rühren zugegeben. Nach 15 Minuten erhält man eine gut rührbare Suspension, deren Temperatur bei 8,6° C liegt. Unter Rühren wird die gewünschte Chlormenge eingegast, wobei bei den Beispielen 1, 3, 4 und 5 sofort, bei den Beispielen 2 und 6 nach 1/3 der Eingaszeit und bei Beispiel 7 nach Ende der Chlorzugabe mit UV-Licht 46 initiiert wurde. Vom Brenner wurden über das optische System ca. 13 Watt Lichtleistung in den Reaktor 37 abgegeben.

Nach dem Einschalten des UV-Brenners 46 setzt eine rege HCl-Entwicklung ein, die über den Blasenzähler 40 beobachtet werden kann. Im allgemeinen ist nach 2 Stunden das rückkondensierte $COCl_2$ farblos und die Temperatur im Kolben 37 wieder auf den Siedepunkt des reinen $COCl_2$ angestiegen.

Zur Suspension werden nun unter Rühren 600 ml Heptan zugetropft. Durch Erhitzen bis zur Siedetemperatur des Heptans, die am Thermometer 47 abgelesen wird, wird das $COCl_2$ über die Destillierbrücke 44 ausgegast. Das chlorierte Polymer wird abgesaugt und bei 50° C im Vakuum getrocknet.

Das rückgewonnene $COCl_2$, Chlorfluormethan und Heptan können nach destillativer Trennung erneut verwendet werden.

Für die Beurteilung der Verfahrensprodukte sowie der angeführten Vergleichsprodukte wurden folgende Methoden verwandt:

K-Wert nach DIN 53726*

Vicatzahl nach DIN 53460

Der Gehalt an C=O und -C=C-Banden wurde mit einem FTIR-Spektrophotometer (Typ Digilab 15 C) an Preßfolien von 600 bis 700 µm Dicke bestimmt. Die mitgeteilten Werte sind Relativzahlen, die den Quotient Extinktion/-Schichtdicke darstellen (vgl. Journal of Macromolecular Science A Chemistry 17, (1982), 923 bis 933).

Die thermische Stabilität wurde nach 2 Methoden ermittelt.

**Bei Methode 1** wurden je 50 mg-Proben der Versuchsprodukte unter Stickstoff auf einer registrierten Thermowaage (Mettler Thermoanalyzer 1) mit einer Geschwindigkeit von 2° C/Min. aufgeheizt. Dabei fielen Kurven an, die den Gewichtsverlust in Abhängigkeit von der Temperatur darstellen. Aus diesen Kurven wurde graphisch der Beginn der Zersetzung ermittelt (Bild 4).

**Bei Methode 2** wurde nach einer Standardrezeptur

| | |
|---|---|
| 100 | Teile Polymer |
| 2 | Teile Nartovin T3 = dreibasisches Bleisulfat der Fa. Metallgesellschaft, Frankfurt |
| 0,5 | Teile Ca-Stearat |
| 0,5 | Teile Pb-Stearat |

auf einem Laborkalandar bei 180° C gemischt. Nach eingetretener Plastifizierung wurde 5 Minuten zur Homogenisierung nachgewalzt und dann ein Walzfell von ca. 500 µm Dicke abgezogen, dessen Farbe beurteilt, und aus dem Proben geschnitten wurden, die in einem auf 180° C geheizten Trockenschrank gelagert wurden. Es wurde die Zeit bis zum Umschlag der Farbe nach Dunkelbraun ermittelt und dieser Wert als "Stabilität" angegeben.

### Beispiele 1 bis 7

In diesen Beispielen werden verschiedene Masse- und Suspensions-PVC-Typen nach dem erfindungsgemäßen Verfahren chloriert. Die Herstellbedingungen sind in der folgenden Tabelle 1 wiedergegeben.

**Tabelle 1**
Chlorierung von PVC - Reaktionsbedingungen

| Beisp. | Art des PVC | K-Wert | Frigen 11 g | Frigen 133 A g | Feststoff Gew.-% i.d. Suspension | Anfahr-Temp. °C | $Cl_2$-Zusatz g | Cl im Endprodukt Gew.-% | Cl-Ausbeute Gew.-% |
|---|---|---|---|---|---|---|---|---|---|
| 1 | Masse-PVC[1] | 58 | - | - | 10 | 2 | 62,1 | 66,8 | 99 |
| 2 | Masse-PVC[1] | 58 | - | - | 25,5 | 3 | 59,6 | 66,5 | 99 |
| 3 | Suspens.-PVC[3] | 71 | - | - | 14 | 1,5 | 64 | 66,5 | 99 |
| 4 | Masse-PVC[2] | 68 | - | 86 | 35 | 0 | 60 | 67 | 99 |
| 5 | Masse-PVC[2] | 68 | 219 | - | 31 | 1 | 67 | 65,9 | 98 |
| 6 | Masse-PVC[2] | 68 | - | - | 15 | 4 | 64 | 67,4 | 99 |
| 7 | Suspens.-PVC[4] | 78 | - | - | 15 | -2 | 65 | 66,9 | 99 |

[1] Vestolit 5867, Handelsname der Fa. CW Marl, Hüls
[2] Vestolit 6867, Handelsname der Fa. CW Marl, Hüls
[3] Vinoflex 7114S, Handelsname der Fa. BASF Aktiengesellschaft, Ludwigshafen
[4] Versuchsmaterial hergestellt durch Suspensensionspolymerisation
Frigen 11 = Trichlorfluormethan, $CCl_3F$, der Fa. Hoechst AG, Frankfurt
Frigen 133A = Chlortrifluorethan, $C_2H_2ClF_3$, der Fa. Hoechst AG, Frankfurt

In Tabelle 2 werden die Eigenschaften der chlorierten Endprodukte wiedergegeben.

**Tabelle 2**
Chlorierung von PVC - Eigenschaften der Endprodukte

| Beispiel | Cl-Gehalt Gew.-% | K-Wert[1] | Vicat[2] °C | FTIR-Bestimmung Gehalt an C=O (Relativzahlen) | C=C | Thermische Stabilität in Stunden bei 180°C in Luft | Walzfell Farbe | Zersetzungsbeginn DTA[3] Aufheizzeit 2°C pro Min. unter $N_2$ |
|---|---|---|---|---|---|---|---|---|
| 1 | 66,8 | 53 | 127 | 71,5 | 0 | 7 | Elfenbein | 260,6 |
| 2 | 66,5 | 54,2 | 126 | 20 | 1,8 | 7 | Elfenbein | 264,3 |
| 3 | 67,0 | 68 | 128 | 69 | 0 | 7 | Ocker | 266,3 |
| 4 | 65,9 | 64 | 121 | 41 | 0 | 4 | Elfenbein | 255 |
| 5 | 67,4 | 64,1 | 132 | 70,1 | 0 | 6 | Gelb | 265,3 |
| 6 | 66,9 | 64,6 | 125 | 36,4 | 0 | 6,5 | Elfenbein | 264 |
| 7 | 66,9 | 74 | 134 | - | 0 | 7 | Elfenbein | 268,7 |

[1] DIN 53726*
[2] DIN 53460
[3] DTA = Differenzialthermoanalyse nach Methode 1

**Beispiele 8 und 9**

In der folgenden Tabelle werden die Chlorierungsbedingungen von zwei verschiedenen Polyethylenen (PE) wiedergegeben.

**Tabelle 3**
Chlorierung von Polyethylen - Eigenschaften der Endprodukte

| Beisp. | Art des PE | [η] cm³/g | Innere (*) Oberfläche m²/g | Dichte g/cm³ | $COCl_2$ g | Feststoff Gew.-% i.d. Suspension | Anfahr- Temp. | $Cl_2$- Zusatz g | Cl im Endprod. Gew.-% | Cl-Aus- beute Gew.-% |
|---|---|---|---|---|---|---|---|---|---|---|
| 8 | GP 5[1] | 1,1 | 0,1 | 0,9248 | 720 | 10 | 0° | 72 | 31 | ~ 100 |
| 9 | Lupolen[2] 1800 H | 1,1 | 1 | 0,919 | 900 | 10 | 0° | 82 | 29 | ~ 100 |

(*) $N_2$-Adsorption (BET), bestimmt nach Journal of American Chemical Society <u>59</u>, (1937), Seite 2682ff
[1] LLDPE-Versuchsprodukt der UCC
[2] LDPE, Handelsprodukt der BASF, umgefällt aus Xylol
[η] Grenzviskosität (intrinsic viscosity) = der Grenzwert der Viskositätszahl für C → 0 (vgl. DIN 53 726)


**Beispiele 8 und 9**

Die Eigenschaften der erhaltenen chlorierten Polyethylene sind im folgenden wiedergegeben.

**Tabelle 4**
Chlorierung von PE - Eigenschaften der Endprodukte

| Beisp. | Cl- Gehalt Gew.-% | Walzfell (*) Farbe | DTA-Zersetzungsbeginn Aufheizzeit 2° C pro Min. unter $N_2$ |
|---|---|---|---|
| 8 | 31 | Weiß | 258,8 |
| 9 | 29 | Weiß | 268,0 |

* Herstell-Rezeptur:
100 Teile chloriertes PE
1 Teil Irgastab 17 M = Butylzinnmercaptid-Stabilisator der Fa. Ciba-Geigy, Basel
0,1 Teile Irganox 1076 = Octadecyl-3-(3,5-di-tert.-butyl-4-hydroxyphenyl)-propionat der Fa. Ciba-Geigy, Basel
5 Minuten gewalzt bei 160°C

In Walzfellen wurde eine helle Eigenfarbe festgestellt. Bei der Differentialthermoanalyse wurde eine sehr hohe Temperatur für den Beginn der Abspaltung von HCl festgestellt.


**Beispiel 10**

In 25 gew.-%-iger Suspension in $COCl_2$ wurde ein durch Suspensionspolymerisation mit Zieglerkontakten hergestelltes Polypropylen (Novolen R 30, Handelsname der BASF Aktiengesellschaft, MFI = 4,0 g/10 min., spez. Oberfläche über $N_2$-Adsorption (BET) = ~ 1 m²/g) zu einem Endprodukt mit 24,5 Gew.-% Chlorgehalt chloriert. Mit der Thermowaage wurde ein Zersetzungsbeginn bei 234° C ermittelt.


**Beispiel 11**

In diesem Fall wurde Polystyrol chloriert. 100 g Polystyrol 148 H (Handelsname der BASF Aktiengesellschaft, Ludwigshafen) wurden in 900 g Phosgen gelöst und mit 68 g $Cl_2$ in 2,5 Stunden unter UV-Belichtung bis zum Verschwinden der gelben Farbe umgesetzt. Die Anfangstemperatur der Lösung betrug +2°C, am Ende der Reaktion wurde der Siedepunkt des Phosgens erreicht. Anschließend wurde zu der hochviskosen Lösung 900 m³ Toluol zugesetzt und das Phosgen abdestilliert, bis im Reaktionskolben der Siedepunkt des Toluols gemessen wurde. Aus der glasklaren Lösung wurde das Reaktionsprodukt nach Einrühren in 3 Liter Ethylalkohol gefällt. Nach Trocknung des abfiltrierten weißen, faserigen Pulvers wurde ein Zersetzungsbeginn bei 220,4° C ermittelt. Das Reaktionsprodukt hatte einen Chlorgehalt von 36,3 Gew.-%. Der größere Teil dieses Chlorgehalts (ca. 4/5) wurde durch Anlagerung an die Benzolringe gebunden.

7

## EP 0 149 142 B1

### Patentansprüche

1. Verfahren zur Chlorierung von Polymeren zu chlorierten Polymeren durch Umsetzen von festen organischen Polymeren mit Chlor in Gegenwart von niedrigsiedenden, Halogen enthaltenden organischen Lösungsmitteln, in denen das Polymere gelöst oder suspendiert ist, bei Temperaturen, die den Siedepunkten der Gemische aus Chlor und Lösungsmittel entsprechen oder darunter durch Initiieren der Reaktion mit aktinischem Licht oder anderen, Radikale erzeugenden Initiatoren, <u>dadurch gekennzeichnet,</u> daß das Lösungsmittel zu 20 bis 100 Gew.-% aus Phosgen besteht.

2. Verfahren nach Anspruch 1, <u>dadurch gekennzeichnet,</u> daß das Lösungsmittel Phosgen ist.

3. Verfahren nach Anspruch 1, <u>dadurch gekennzeichnet,</u> daß das Lösungsmittel aus einem Gemisch aus mindestens 50 Gew.-% Phosgen und einem Chlorfluorkohlenstoff besteht.

4. Verfahren nach Anspruch 1, <u>dadurch gekennzeichnet,</u> daß das Lösungsmittel aus einem Gemisch aus mindestens 50 Gew.-% Phosgen und einem Chlorfluorkohlenwasserstoff besteht.

5. Verfahren nach Anspruch 1, <u>dadurch gekennzeichnet,</u> daß das Lösungsmittel aus einem Gemisch aus mindestens 50 Gew.-% Phosgen und Chlortrifluormethan besteht.

### Claims

1. A process for the chlorination of a polymer to give a chlorinated polymer by reaction of a solid organic polymer with chlorine in the presence of a low-boiling halogen-containing organic solvent, in which the polymer is dissolved or suspended, at or below the boiling point of the mixture of chlorine and solvent, by initiation of the reaction with actinic light or another initiator which produces free radicals, wherein the solvent contains from 20 to 100 % by weight of phosgene.

2. A process as claimed in claim 1, wherein the solvent is phosgene.

3. A process as claimed in claim 1, wherein the solvent consists of a mixture of not less than 50 % by weight of phosgene and a chlorofluorocarbon.

4. A process as claimed in claim 1, wherein the solvent consists of a mixture of not less than 50 % by weight of phosgene and a chlorofluorohydrocarbon.

5. A process as claimed in claim 1, wherein the solvent consists of a mixture of not less than 50 % by weight of phosgene and chlorotrifluoromethane.

### Revendications

1. Procédé de chloration de polymères en polymères chlorés par la réaction de polymères organiques solides avec le chlore en présence de solvants organiques halogénés à bas point d'ébullition, dans lesquels le polymère est dissous ou en suspension, à des températures correspondant aux points d'ébullition des mélanges chlore-solvant ou inférieures à ceux-ci, la réaction étant amorcée par la lumière actinique ou d'autres amorceurs formant des radicaux libres, caractérisé en ce que le solvant est constitué à raison de 20 à 100 % en poids de phosgène.

2. Procédé suivant la revendication 1, caractérisé en ce que le solvant est du phosgène.

3. Procédé suivant la revendication 1, caractérisé en ce que le solvant est constitué d'un mélange d'au moins 50 % en poids de phosgène et d'un carbone chlorofluoré.

4. Procédé suivant la revendication 1, caractérisé en ce que le solvant est constitué d'un mélange d'au moins 50 % en poids de phosgène et d'un hydrocarbure chloro-fluoré.

5. Procédé suivant la revendication 1, caractérisé en ce que le solvant est un mélange d'au moins 50 % en poids de phosgène et de chloro-trifluoro-méthane.

FIG.1

FIG.2

3

FIG.3

FIG.4

% Gew. Abnahme

268,7
268,0

(•) = Beispiel 7
(∘) = Beispiel 9

T°C

EP 0 149 142 B1